# EUROPEAN PATENT APPLICATION

(11) **EP 3 968 120 A1**
(43) Date of publication of application: **16.03.2022**
(21) Application number: 20195517.6
(22) Date of filing: 10.09.2020
(51) Int. Cl.: G05D 23/27, F27D 21/00, G01B 11/06, G01N 22/02, G01N 25/72

(54) **SYSTEM AND METHOD FOR MONITORING AND CONTROLLING FURNACES**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: VANKAMPEN, Peter, Shanghai 200233 (CN); CHALENKO, Dmitriy, 02000 Kyiv (UA); GANGADHARAN, Manoj, 110044 New Delhi (IN); MISYURA, Maxim, 115054 Moscow (RU); KEPINSKI, Laurent, 60-476 Poznan (PL)
(74) Representative: Air Liquide

(57) **Abstract**

This invention discloses a furnace monitoring and/or controlling system. The system comprises a thermal imaging apparatus disposed at a distance from the exterior of the furnace to generate field signals of the furnace, a signal processing unit configured and programed for receiving said field signals and generating a temperature map of the exterior of the furnace and means for displaying the temperature map of the exterior of the furnace. The system may further comprise an analyzing unit configured and programmed for producing control signals based on received field signals or temperature map and a furnace controller configured for receiving said control signals and applying them to control the furnace. The present invention also describes a method for controlling the operation of a furnace with the above-mentioned system.

## Description

### FIELD OF THE INVENTION

The present invention relates to furnace operation monitoring or controlling method and system. More particularly, it relates to furnace operation monitoring or controlling with thermal imaging technology.

### BACKGROUND

A wide variety of industries, such as steel, aluminum and glass, all relies on furnaces for manufacturing processes. Furnaces are prone to inefficiency or failures caused by many reasons. Examples include coking that covers the interior of the furnace, under- and over- heating, burner misalignment and product leakage. Process conditions also impact the performance of the furnaces significantly. If these failures or suboptimal conditions were not corrected, they would result in quality issues, waste of energy, even shut-down of an entire process line.

Common methods for monitoring the operation of furnaces consist of temperature sensing and infrared imaging. The sensors or IR cameras are placed either inside the furnace or close to a viewing port, and they measure a single point or a very limited area inside the furnace. As a result, operators cannot obtain an overview and form a direct correlation between process steps and furnace performance.

### Summary of the Invention

The invention aims to provide a system and a method, which allows for a holistic data collection and monitoring of the entire furnace over a period of time. Such a system and method may be based on thermal imaging technologies, especially infrared (IR) cameras. Suitable control algorithms can be applied to treat collected data to produce control signals, which is then fed to a furnace controller to optimize the performance of the furnace. Improved furnace control offers the potential for significant energy savings and emissions reductions, especially NOₓ. The entire system is designed to be rugged, easy to install, and relatively transparent to the furnace operator.

In one aspect, the present invention discloses a furnace monitoring system comprising a thermal imaging apparatus, said apparatus is disposed at a distance from the exterior of the furnace to generate field signals of the furnace, a signal processing unit configured and programed for receiving said field signals and generating a temperature map of the exterior of the furnace and means for displaying the temperature map locally or remotely.

In another aspect, the thermal imaging apparatus comprises a CCD camera.

In another aspect, the temperature map is divided into several zones, which correspond to different components of the furnace.

In yet another aspect, the different components are selected from burner, charging port, discharging port or flue gas channel.

In another aspect, the present invention discloses a furnace controlling system comprising a thermal imaging apparatus, said apparatus is disposed at a distance from the exterior of the furnace to generate field signals of the furnace, a signal processing unit configured and programed for receiving said field signals and generating a temperature map of the exterior of the furnace, means for displaying the temperature map locally or remotely, an analyzing unit configured and programed for producing control signals based on received field signals or temperature map and a furnace controller configured for receiving said control signals and applying them to control the furnace.

In another aspect, the present invention discloses a method for controlling the operation of a furnace based on the above-described furnace controlling system, which comprises the following steps: producing field signals of the exterior of a furnace over a span of time with a thermal imaging apparatus, transmitting the field signals to a signal processing unit for generating a temperature map of the exterior of the furnace over the span of time, said temperature map being displayed locally or remotely, providing an analyzing unit, which applies a control algorism to received field signals or temperature maps to produce control signals and controlling the operation of the furnace by a furnace controller using received control signals.

For the afore-mentioned method, the span of time covers multiple operational steps.

In the current invention, the thermal imaging apparatus, in particular an IR camera, is placed outside and at a distance from the furnace; thus it eliminates the need of expensive heat-resistant materials or cooling accessories for the imaging apparatus. Disposed at a proper location, the thermal imaging apparatus and corresponding signal processing unit produce a full thermal profile or a temperature map of the furnace over a period of time; alternatively, the thermal profile or temperature map can be divided into different zones focusing on selected components of the furnace, which improves imaging sensitivity. Since the temperature map is captured over the continuous operation of the furnace, heat leak, overheating spots or other abnormalities associated with specific parts or processing steps is readily visible to operators either locally or remotely. Such information can help the operators optimize the process and/or monitor the physical condition of the furnace to prevent catastrophic failures. In addition, such information can be input into an analyzing unit to generate control signals, which are in turn fed into a furnace controller for controlling the furnace. The control algorithm adapted by the analyzing unit may be developed through mathematical calculation or simulation of historical operational data. In summary, the present invention provides an economical and near real-time method for monitoring, optimizing and controlling the operation of a furnace. Consequentially, preventive maintenance can be performed when needed and costly unexpected failures or shutdowns can be avoided.

### Description of the Drawing

The accompanying drawings are to be understood as examples of the present invention, and do not in any way limit the scope thereof.
Figure 1 is a schematic showing components of a furnace monitoring and controlling system.
Figure 2 is a flow chart indicating the steps of the present invention.

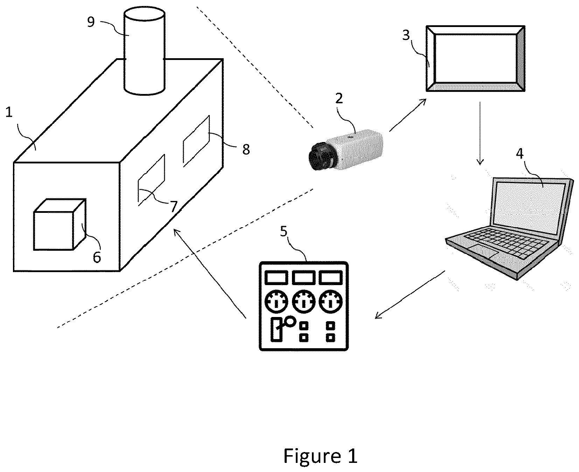

In figure 1, for representation: 1- furnace, 2-CCD camera, 3-signal processing unit, 4-analyzing unit, 5-furnace controller, 6-burner, 7-loading port, 8-discharging port, 9-flue gas channel.

### Detailed Description

In the invention, a thermal imaging apparatus using multiple infrared wavelengths is employed to obtain fast and accurate temperature mapping of the full field of the furnace during operation. For example, the thermal imaging apparatus comprises a CCD camera, which sends field signals to a beam splitter. One beam was to be used to optically focus the camera; the other beam was to be sent to a signal processing unit, such as a computer containing data processing software. "Field signals" refer to the mapping of the interested area, as in contrast to signals measured only from individual points. In the present invention, the CCD camera is disposed at a location capable of capturing signals from all areas of interest, including the burner, all viewing, loading and discharging ports, as well as flue gas channels. IR signals collected from the field would be digitally processed into false-color temperature maps, which can be stored or displayed on a monitor. Monitors or other displaying means may be located in vicinity to the furnace or away from the furnace in a remote area.

Alternatively, the measuring field of the CCD camera can be divided into different zones, each of which focuses on selected components of the furnace, such as the loading port, the discharging port, viewing ports for observing the burner and the flue gas channel. Only field signals from these selected zones are collected and processed. This way, data sensitivity and processing speed are increased and the resulted temperature maps are clearer for operators.

Operators, who view the temperature map of the furnace at either a local or a remote location, can compare the measured temperature with set temperature of the furnace and adjust operational parameters according to his/her experiences or set protocols. Accurate temperature measurements are obtained by comparing the pixel intensities at two distinct IR wavelengths. Near IR wavelengths of 700-800 nm may be used.

In addition to or in place of the operators' manual control, the digitally processed field signals or the temperature map are also sent into an analyzing unit. In the analyzing unit, software based on incorporated control algorithms can be run either locally or on a cloud-based server to produce control signals which perform various functions. The control algorithms minimize differences between field temperature set points and measured field temperatures. The software allows storage of data and review of historical information. The control signals are transmitted to a furnace controller for controlling the furnace either in a closed loop or open loop fashion both to keep operation parameters within safe or in-control limits and to automatically tune them to pre-set values or to quickly respond to warning signs. For doing so, the analyzing unit may compare present data values to alarm or alert threshold values to determine whether alerts are desirable or required, and may also analyze combinations of sensor data against a theoretical and experimental database to determine whether maintenance is required or another condition exists that requires attention. Alternatively, such analysis and alarm determination may be performed by a cloud computing system. The alerting can be done via any standard method including through the use of lights or audible alarms in the control room, at the burner, at the flow control skid, or at any other convenient location. The furnace controller can be a primary or an auxiliary controller, which is configured to receive the control signals to assist with furnace control.

With the above-described furnace monitoring and controlling system, field temperature data of furnace exteriors and loads are generated in essentially real time and can be obtained or stored over a period of time covering various process steps. A mathematical model or simulation is built based on historical data for more optimal operation conditions. Through comparison with the optimized database, field control is performed. Field control works in conjunction with traditional controllers to provide adjustments to mitigate hot spots and instabilities and to optimize combustion performance. Field control consists not of matching set points of a limited number of measurements, but of minimizing the difference between a set of field set points and actual field measurements. For example, the control algorithms determine needed adjustments to air/fuel ratio, firing rate for all burners, sequence and frequency of loading and discharging, as well as time intervals for each process steps. Consequentially, objectives such as increased thermal efficiency, lower NOx emissions, elimination of hot spots, and prevention of shutdowns are achieved.

In all embodiments, signals are transmitted via wires or a network such as Internet, an intranet, a local area network (LAN), and a wide area network (WAN). The data processing unit may include a local or cloud-based server, where data can be archived and retrieved.

Figure 1 illustrates a furnace monitoring and controlling system of the present invention. An exemplary furnace **1** includes a furnace body, a burner **6,** a loading port **7,** a discharging port **8** and a flue gas channel **9.** The loading port **7** is opened for feeding raw materials into the furnace and closed after the feeding is done. Likewise, the discharging port **8** is opened and closed for unloading the products. Their open duration, relative sequence and time intervals in between steps have an impact on the energy efficiency of the furnace performance. At least one thermal imaging apparatus, in this case, a CCD camera **2** is placed at a predetermined location outside of the furnace, which enables it to take measurements of the selected components of the furnace. Since the signals are collected over the entire field, and not focused on a few distinctive points, the signals are referred to as field signals. Such field signals are transmitted to a signal processing unit **3** either through hardwires or wireless network. The signal processing unit **3** converts the field signals into a temperature map and the map is displayed either through an integrated display device or sent out to a remote display device, such as a cellular phone for the operators to view. When more controlling functions are desired, the temperature map or the raw field signals are fed into an analyzing unit **4,** which utilizes a control algorithm to produce control signals based on comparison with data for ideal operational condition. The analyzing unit **4** can be a stand-alone computer or is combined with the signal processing unit **3** into one piece of equipment. The control signals are then transmitted to a furnace controller **5** to facilitate its control over the operation of the furnace. Normally, the furnace controller **5** relies on signals from other sensors to practice primary control and the signals originally captured by the thermal imaging apparatus serve as source for auxiliary control.

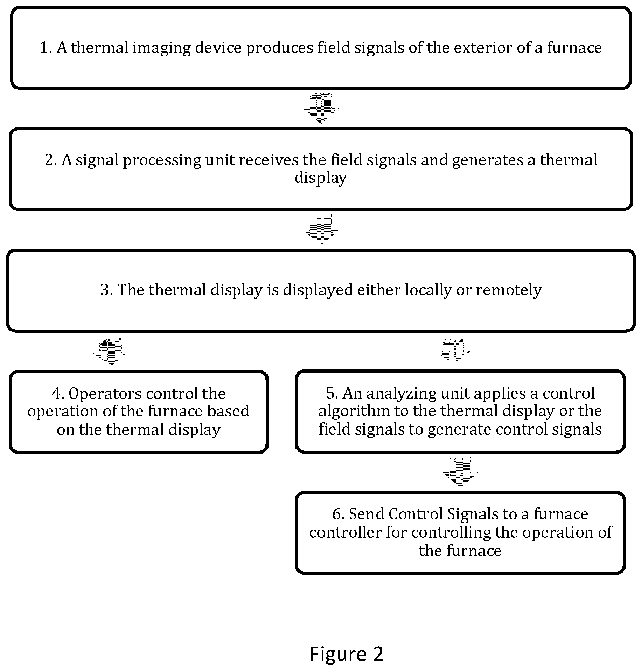

The steps for monitoring and controlling the furnace are summarized in the flowchart of Figure 2.

Although this invention has been described in detail with reference to certain embodiments, those skilled in the art will recognize that variations and modifications of the described embodiments may be used. Accordingly, these variations and modifications are also within the spirit and scope of the invention as defined by the appended claims and their equivalents.

## Claims

1. A furnace monitoring system comprising:
a) a thermal imaging apparatus, said apparatus is disposed at a distance from the exterior of the furnace to generate field signals of the furnace;
b) a signal processing unit configured and programed for receiving said field signals and generating a temperature map of the exterior of the furnace;
c) means for displaying the temperature map locally or remotely.

2. A furnace monitoring system comprising an infrared CCD camera disposed at a distance from the exterior of the furnace to generate a temperature map of the exterior of the furnace, wherein the temperature map can be viewed locally or remotely.

3. The furnace monitoring system of claim 1 or 2, wherein the temperature map is divided into several zones, which correspond to different components of the furnace.

4. The furnace monitoring system of claim 3, wherein the different components are selected from burner, charging port, discharging port or flue gas channel.

5. A furnace controlling system comprising:
a) a thermal imaging apparatus, said apparatus is disposed at a distance from the exterior of the furnace to generate field signals of the furnace;
b) a signal processing unit configured and programed for receiving said field signals and generating a temperature map of the exterior of the furnace;
c) means for displaying the temperature map locally or remotely;
d) an analyzing unit configured and programed for producing control signals based on received field signals or temperature map;
e) a furnace controller configured for receiving said control signals and applying them to control the furnace.

6. A method for controlling the operation of a furnace based on the furnace controlling system of claim 5, comprising:
a) producing field signals of the exterior of a furnace over a span of time with a thermal imaging apparatus;
b) transmitting the field signals to a signal processing unit for generating a temperature map of the exterior of the furnace over the span of time, said temperature map being displayed locally or remotely;
c) providing an analyzing unit, which applies a control algorism to received field signals or temperature maps to produce control signals;
d) controlling the operation of the furnace by a furnace controller using received control signals.

7. The method of claim 6, wherein step a) and b) are performed by a CCD camera.

8. The method of claim 6, wherein the temperature map is divided into several zones, which correspond to different components of the furnace.

9. The method of claim 8, wherein the different components are selected from burner, charging port, discharging port or flue gas channel.

10. The method of claim 6, wherein the span of time covers multiple operation steps.

11. The method of claim 10, wherein the multiple operation steps include feeding raw materials into the furnace through the charging port and discharging the residues from the discharging port.
